(19)

**Europäisches Patentamt**
**European Patent Office**
**Office européen des brevets**

(11) **EP 4 725 898 A1**

(12) **EUROPEAN PATENT APPLICATION**
published in accordance with Art. 153(4) EPC

(43) Date of publication:
**15.04.2026 Bulletin 2026/16**

(21) Application number: **23940724.0**

(22) Date of filing: **08.06.2023**

(51) International Patent Classification (IPC):
*C01B 13/10* (2006.01)   *B01D 53/04* (2006.01)

(52) Cooperative Patent Classification (CPC):
**B01D 53/04; C01B 13/10**

(86) International application number:
**PCT/JP2023/021388**

(87) International publication number:
**WO 2024/252626 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **MURATA Miku**
**Tokyo 100-8310 (JP)**

• **OINUMA Gaku**
**Tokyo 100-8310 (JP)**
• **MATSUURA Yoko**
**Tokyo 100-8310 (JP)**
• **YASUNAGA Nozomu**
**Tokyo 100-8310 (JP)**
• **ODAI Yoshiaki**
**Tokyo 100-8310 (JP)**
• **KOGA Hiromichi**
**Tokyo 100-8310 (JP)**

(74) Representative: **Witte, Weller & Partner**
**Patentanwälte mbB**
**Postfach 10 54 62**
**70047 Stuttgart (DE)**

(54) **OZONE SUPPLY SYSTEM AND OZONE SUPPLY METHOD**

(57)      An ozone supply system (1) includes: an adsorption column (A, B) in which an adsorbent for adsorbing the ozone generated by an ozone generator (3) from oxygen supplied from an oxygen source (2) is stored and an adsorption step of adsorbing the ozone to the adsorbent and a desorption step of desorbing the ozone from the adsorbent are repeated alternately; a circulation path (120) through which oxygen gas not adsorbed to the adsorbent is led out from the adsorption column (A, B) and circulated to be supplied to the ozone generator (3), in the adsorption step; a first supply section (4) for first carrier gas; a carrier gas introduction path (103) through which the first carrier gas is introduced from the first supply section (4) into the adsorption column (A, B) in the desorption step; a carrier gas lead-out path (104) through which the ozone taken along with the first carrier gas is led to outside of the adsorption column (A, B) in the desorption step; and a depressurizing section (5) which depressurizes inside of the adsorption column (A, B) to a pressure lower than an atmospheric pressure in the desorption step.

FIG. 1

EP 4 725 898 A1

## Description

TECHNICAL FIELD

The present disclosure relates to an ozone supply system and an ozone supply method.

BACKGROUND ART

A conventional ozone supply system includes: a high-purity oxygen gas supply source which supplies high-purity oxygen gas as an ozone source; an ozone generator which generates ozone using, as a source, the high-purity oxygen gas supplied from the high-purity oxygen gas supply source; an adsorption tube in which an adsorbent for preferentially adsorbing ozone is contained and in which operations of adsorbing ozone generated by the ozone generator in an adsorption step at a relatively low temperature and desorbing the ozone in a desorption step at a relatively high temperature are performed alternately; an oxygen circulation path through which oxygen gas led out from the adsorption tube without being adsorbed to the adsorbent in the adsorption step is circulated and mixed with the high-purity oxygen gas; a purge gas introduction path through which purge gas for leading out ozone desorbed from the adsorbent in the desorption step from the adsorption tube by taking the ozone along with the purge gas is introduced into the adsorption tube; an ozone lead-out path through which ozone-accompanying purge gas is led out from the adsorption tube in the desorption step; an ozone supply path through which the ozone-accompanying purge gas led out to the ozone lead-out path is supplied as product ozone to an ozone consumption destination; and a pump for sucking gas from the inside of the adsorption tube, increasing the pressure thereof, and then introducing and mixing the gas with the product ozone (see, for example, Patent Document 1).

CITATION LIST

PATENT DOCUMENT

Patent Document 1: Japanese Laid-Open Patent Publication No. 2001-172004

SUMMARY OF THE INVENTION

PROBLEM TO BE SOLVED BY THE INVENTION

In the conventional ozone supply system and ozone supply method, purging is performed with oxygen gas having a low concentration in order to reduce the usage amount of oxygen. Therefore, nitrogen gas introduced at the time of desorption remains in the adsorption column, so that the nitrogen concentration in the adsorption column increases in shifting from desorption to adsorption of ozone gas. Thus, ozone generation efficiency is reduced and a nitrogen oxide which can cause corrosion of a path or the like is generated.

The present disclosure has been made to solve the above problem, and an object of the present disclosure is to provide an ozone supply system and an ozone supply method that can suppress increase in a nitrogen concentration in an adsorption column.

MEANS TO SOLVE THE PROBLEM

An ozone supply system according to the present disclosure includes: an ozone generator which generates ozone from oxygen supplied from an oxygen source; an adsorption column in which an adsorbent for adsorbing the ozone generated by the ozone generator is stored and an adsorption step of adsorbing the ozone to the adsorbent and a desorption step of desorbing the ozone from the adsorbent are repeated alternately; a circulation path through which oxygen not adsorbed to the adsorbent is led out from the adsorption column and circulated to be supplied to the ozone generator, in the adsorption step; a first supply section for first carrier gas; a carrier gas introduction path through which the first carrier gas is introduced from the first supply section into the adsorption column in the desorption step; a carrier gas lead-out path through which the ozone taken along with the first carrier gas is led to outside of the adsorption column in the desorption step; and a depressurizing section which depressurizes inside of the adsorption column to a pressure lower than an atmospheric pressure in the desorption step.

An ozone supply method according to the present disclosure includes: an adsorption step of adsorbing generated ozone to an adsorbent stored in an adsorption column, leading out oxygen not adsorbed to the adsorbent from the adsorption column, introducing the oxygen as source gas into an ozone generator again to regenerate ozone, and supplying the ozone to the adsorption column; a first desorption step of, after the adsorption step is finished, introducing first carrier gas into the adsorption column and desorbing the ozone adsorbed to the adsorbent by taking the ozone along with the first carrier gas so as to be led out to the adsorption column; and a vacuum desorption step of, after introduction of the first carrier gas is stopped, depressurizing inside of the adsorption column until a pressure in the adsorption column becomes lower than an atmospheric pressure.

An ozone supply method according to the present disclosure includes: an adsorption step of adsorbing generated ozone to an adsorbent stored in an adsorption column, leading out oxygen not adsorbed to the adsorbent from the adsorption column, introducing the oxygen as source gas into an ozone generator again to regenerate ozone, and supplying the ozone to the adsorption column; a first desorption step of, after the adsorption step is finished, introducing first carrier gas into the adsorption column and desorbing the ozone adsorbed to the adsorbent by taking the ozone along with the first carrier gas so as to be led out to the adsorption column; and a second desorption step of, after introduction of the first carrier gas is stopped, introducing second carrier gas having a lower nitrogen concentration than a nitrogen concentration of the first carrier gas, desorbing the ozone adsorbed to the adsorbent, and leading the desorbed ozone to outside of the adsorption column, and also replacing the first carrier gas remaining in the adsorption column with the second carrier gas.

EFFECT OF THE INVENTION

With the ozone supply system and the ozone supply method according to the present disclosure, increase in a nitrogen concentration in an adsorption column can be suppressed.

BRIEF DESCRIPTION OF THE DRAWINGS

[FIG. 1] FIG. 1 is a block diagram showing a configuration of an ozone supply system according to embodiment 1.

[FIG. 2] FIG. 2 is a flowchart showing a process of an ozone supply method using the ozone supply system shown in FIG. 1.

[FIG. 3] FIG. 3 is a block diagram showing a configuration of an ozone supply system according to embodiment 2.

[FIG. 4] FIG. 4 is a flowchart showing a process of an ozone supply method using the ozone supply system shown in FIG. 3.

[FIG. 5] FIG. 5 is a flowchart showing a process of another ozone supply method using the ozone supply system shown in FIG. 3.

DESCRIPTION OF EMBODIMENTS

Embodiment 1

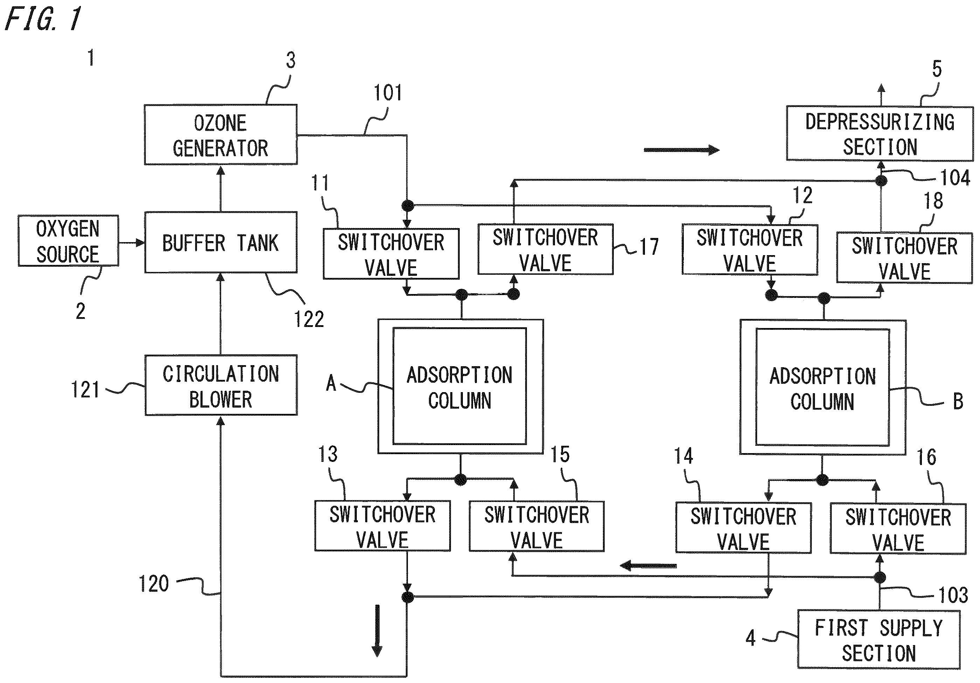

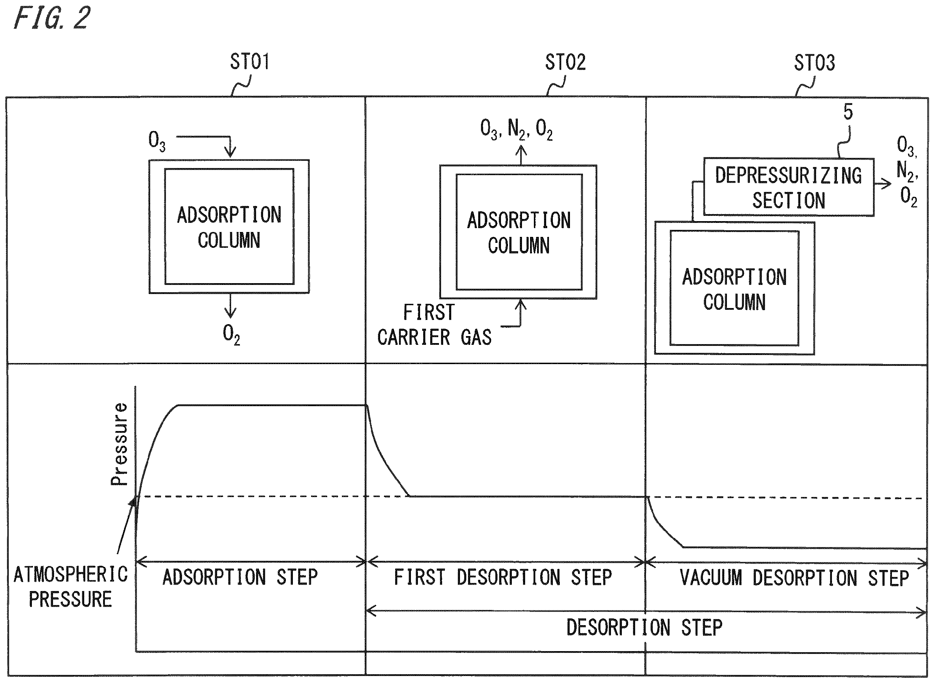

FIG. 1 is a block diagram showing a configuration of an ozone supply system according to embodiment 1. FIG. 2 is a flowchart showing a process of an ozone supply method using the ozone supply system shown in FIG. 1. In FIG. 1, an ozone supply system 1 includes an adsorption column A, an adsorption column B, an ozone generator 3 connected to both of the adsorption column A and the adsorption column B, an ozone introduction path 101, a circulation path 120, a first carrier gas introduction path 103, a carrier gas lead-out path 104, a first supply section 4, and a depressurizing section 5.

In the adsorption column A and the adsorption column B, adsorbents for adsorbing ozone are stored.

The ozone supply system 1 performs an adsorption step of adsorbing ozone to an adsorbent and a desorption step of desorbing ozone from the adsorbent after adsorption while alternately switching therebetween, in the adsorption column A and the adsorption column B. The ozone generator 3 receives oxygen from an oxygen source 2 via a buffer tank 122 described later, generates ozone, and supplies ozone via the ozone introduction path 101 to the adsorption column A or the adsorption column B undergoing the adsorption step. The circulation path 120 includes: a circulation blower 121 for leading out oxygen gas not adsorbed to the adsorbent from the adsorption column A or the adsorption column B undergoing the adsorption step, and introducing the oxygen gas to the ozone generator 3 again so as to be reused as source gas, thus circulating the oxygen gas; and a buffer tank 122 which can temporarily store the oxygen gas to be circulated.

The first supply section 4 supplies first carrier gas for desorbing ozone adsorbed to the adsorbent, via the first carrier gas introduction path 103, to the adsorption column A or the adsorption column B undergoing the desorption step. As the first carrier gas, for example, dry air is used. Through the carrier gas lead-out path 104, ozone taken along with the first carrier gas is led out from the adsorption column A or the adsorption column B undergoing the desorption step, to the depressurizing section 5.

The depressurizing section 5 depressurizes the inside of the adsorption column A or the adsorption column B undergoing the desorption step via the carrier gas lead-out path 104 until the inside pressure becomes lower than the atmospheric pressure. The depressurizing section 5 is formed of a vacuum pump, for example. Switchover valves 11, 12, 13, 14, 15, 16, 17, and 18 which open/close through a predetermined procedure in switching the steps for the adsorption column A and the adsorption column B are provided to the paths 101, 120, 103, and 104.

Next, an ozone supply method in the ozone supply system of embodiment 1 configured as described above will be described. Here, the adsorption column A will be mainly described. As a matter of course, when the adsorption step is being performed in the adsorption column A, the desorption step is being performed in the adsorption column B. When the desorption step is being performed in the adsorption column A, the adsorption step is being performed in the adsorption column B. The same applies to the other embodiments and therefore the description thereof is omitted as appropriate.

First, the ozone generator 3 receives oxygen from the oxygen source 2, generates ozone, and introduces ozone via the ozone introduction path 101 into the adsorption column A undergoing the adsorption step. Next, the introduced ozone is adsorbed to the adsorbent in the adsorption column A. At the same time, oxygen gas not adsorbed to the adsorbent in the adsorption column A is led from the circulation path 120 to the outside of the adsorption column A, and the oxygen gas is supplied as source gas to the ozone generator 3 again via the circulation blower 121 and the buffer tank 122, thus performing the adsorption step (step ST01 in FIG. 2). At this time, the pressure in the adsorption column A is higher than the atmospheric pressure. When the adsorption step in the adsorption column A is finished, introduction of ozone from the ozone generator 3 into the adsorption column A is stopped.

Next, the first supply section 4 introduces dry air as the first carrier gas into the adsorption column A undergoing the desorption step, via the first carrier gas introduction path 103. The introduced first carrier gas flows while ozone adsorbed to the adsorbent in the adsorption column A is taken along with the first carrier gas, via the carrier gas lead-out path 104, so as to be discharged to the outside of the adsorption column A, thus performing the first desorption step (step ST02 in FIG. 2). At this time, since dry air is introduced into the adsorption column A, the pressure in the adsorption column A is reduced to approximately the atmospheric pressure. Here, in the first desorption step, ozone taken along with the first carrier gas passes through the carrier gas lead-out path 104 so as to be led to the outside of an apparatus via the depressurizing section 5, as an example. However, without limitation thereto, in the first desorption step, ozone may be led to the outside of the apparatus not via the depressurizing section 5.

Next, introduction of the first carrier gas is stopped, and then the inside of the adsorption column A is depressurized by the depressurizing section 5 via the carrier gas lead-out path 104 until the pressure in the adsorption column A becomes lower than the atmospheric pressure, thus performing a vacuum desorption step (step ST03 in FIG. 2). At this time, a first carrier gas component remaining in the adsorption column A and the carrier gas lead-out path 104 is discharged. Thus, accumulation of nitrogen gas in the adsorption column A is reduced, whereby a generation amount of NOx gas due to increase in nitrogen gas in the circulation path 120 in the next adsorption step (step ST01) can be reduced. Thus, reduction in ozone generation efficiency can be suppressed and a nitrogen oxide which can cause corrosion of a path or the like can be reduced. Then, depressurizing by the depressurizing section 5 is finished, and the process returns to the adsorption step (step ST01 in FIG. 2).

As described above, the above effects can be obtained if the pressure in the adsorption column A in the vacuum desorption step is lower than the atmospheric pressure. Further, in order to assuredly obtain these effects, the following is conceivable.

For example, the nitrogen concentration in the adsorption column A undergoing the adsorption step is denoted by C1, the pressure value in the adsorption column A is denoted by P1, the nitrogen concentration in the first carrier gas in the first desorption step is denoted by C2, and the pressure value in the adsorption column A undergoing the vacuum desorption step is denoted by P2.

$$C1{\times}P1 \geq C2{\times}P2 \quad ... \quad (\text{Formula 1})$$

The adsorption column A is depressurized until the relationship of the above formula is satisfied.

While the adsorption column A is depressurized until the relationship of the above (Formula 1) is satisfied, the partial pressure (concentration × pressure) of nitrogen gas in the vacuum desorption step (step ST03) may be reduced to not higher than the partial pressure of nitrogen gas in the adsorption step (step ST01), whereby the amount of nitrogen gas adsorbed to the adsorbent in the adsorption column A when the desorption step is finished can be assuredly reduced to be smaller than in the adsorption step. Thus, accumulation of nitrogen gas in the adsorption column A can be assuredly reduced, and the generation amount of NOx gas due to increase in nitrogen gas in the circulation path 120 in the next adsorption step (step ST01) can be assuredly reduced.

The ozone supply system according to embodiment 1 configured as described above includes: an ozone generator which generates ozone from oxygen supplied from an oxygen source; an adsorption column in which an adsorbent for adsorbing the ozone generated by the ozone generator is stored and an adsorption step of adsorbing the ozone to the adsorbent and a desorption step of desorbing the ozone from the adsorbent are repeated alternately; a circulation path through which oxygen not adsorbed to the adsorbent is led out from the adsorption column and circulated to be supplied to the ozone generator, in the adsorption step,; a first supply section for first carrier gas; a carrier gas introduction path through which the first carrier gas is introduced from the first supply section into the adsorption column in the desorption step; a carrier gas lead-out path through which the ozone taken along with the first carrier gas is led to outside of the adsorption column in the desorption step; and a depressurizing section which depressurizes inside of the adsorption column to a pressure lower than an atmospheric pressure in the desorption step.

Thus, increase in the nitrogen concentration in the adsorption column can be suppressed.

The ozone supply method according to embodiment 1 configured as described above includes: an adsorption step of adsorbing generated ozone to an adsorbent stored in an adsorption column, leading out oxygen not adsorbed to the adsorbent from the adsorption column, introducing the oxygen as source gas into an ozone generator again to regenerate ozone, and supplying the ozone to the adsorption column; a first desorption step of, after the adsorption step is finished, introducing first carrier gas into the adsorption column and desorbing the ozone adsorbed to the adsorbent by taking the ozone along with the first carrier gas so as to be led out to the adsorption column; and a vacuum desorption step of, after introduction of the first carrier gas is stopped, depressurizing inside of the adsorption column until a pressure in the adsorption column becomes lower than an atmospheric pressure.

Thus, increase in the nitrogen concentration in the adsorption column can be suppressed.

In the ozone supply method according to embodiment 1 configured as described above, in the vacuum desorption step, the adsorption column is depressurized until $C1 \times P1 \geq C2 \times P2$ is satisfied, where P1 is a pressure value in the adsorption column undergoing the adsorption step, P2 is a pressure value in the adsorption column in the vacuum desorption step, C1 is a nitrogen concentration in the adsorption column undergoing the adsorption step, and C2 is a nitrogen concentration of the first carrier gas in the first desorption step.

Thus, depressurizing is performed until the partial pressure of nitrogen in the vacuum desorption step is reduced to not higher than the partial pressure of nitrogen in the adsorption step, whereby the amount of nitrogen adsorbed to the adsorbent becomes not larger than the same amount, so that nitrogen can be prevented from remaining in a large amount in the adsorption column.

Embodiment 2

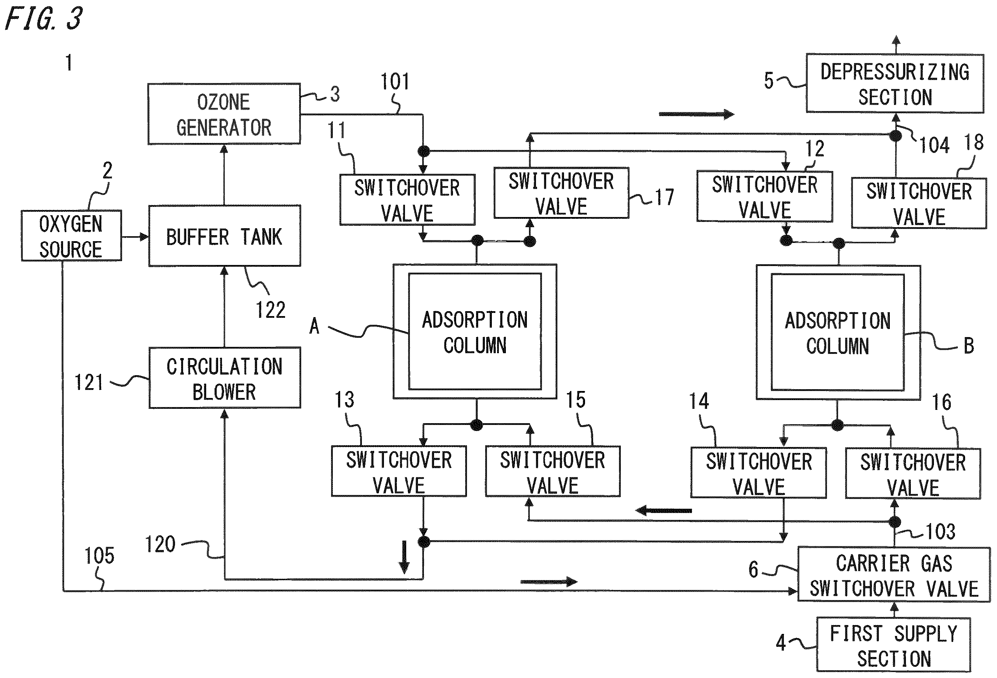

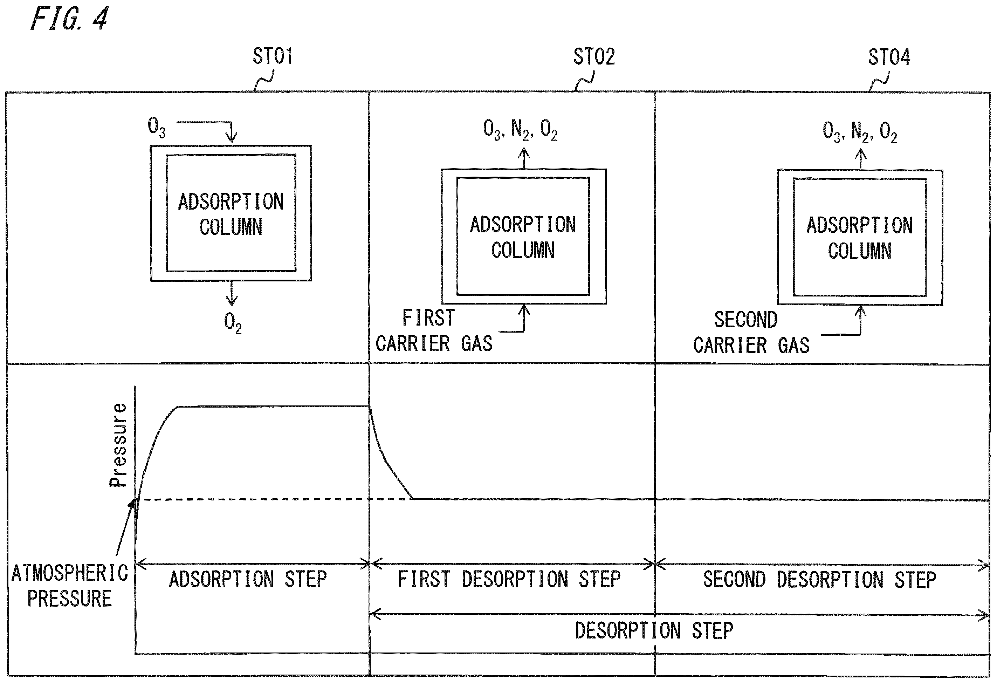

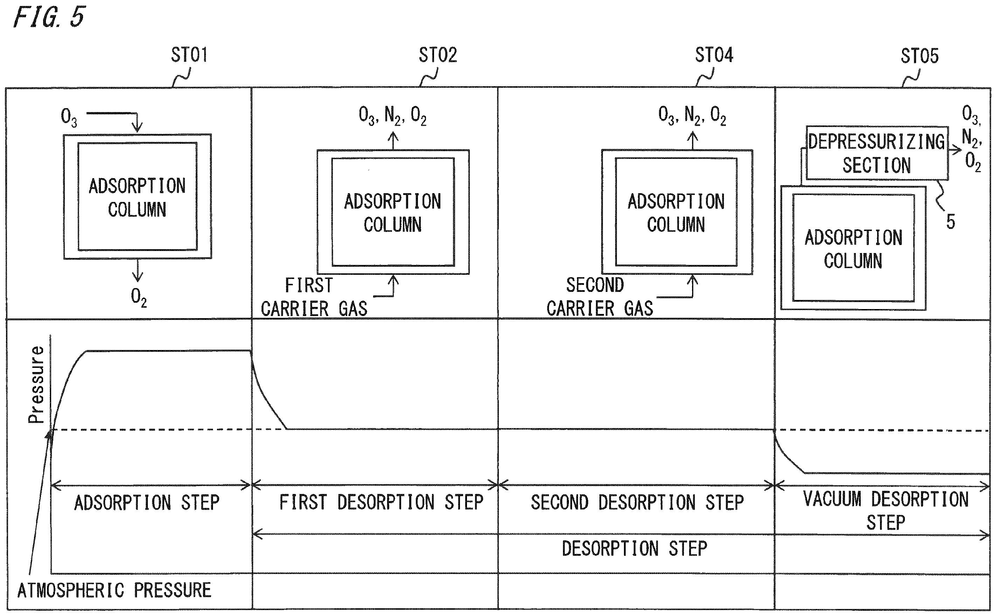

FIG. 3 is a block diagram showing a configuration of an ozone supply system according to embodiment 2. FIG. 4 is a flowchart showing a process of an ozone supply method using the ozone supply system shown in FIG. 3. FIG. 5 is a flowchart showing a process of another ozone supply method using the ozone supply system shown in FIG. 3.

In the drawings, the same parts as in the above embodiment 1 are denoted by the same reference characters and the description thereof is omitted. In FIG. 3, in the ozone supply system 1, the oxygen source 2 serves as a second supply section which supplies oxygen gas as second carrier gas having a lower nitrogen concentration than the nitrogen concentration of the first carrier gas. The oxygen source 2 introduces the second carrier gas via a second carrier gas introduction path 105 into the adsorption column A or the adsorption column B undergoing the desorption step. A carrier gas switchover valve 6 is provided to switch between supply of the first carrier gas and supply of the second carrier gas to the adsorption column A or the adsorption column B undergoing the desorption step.

Next, the ozone supply method in the ozone supply system according to embodiment 2 configured as described above will be described. First, as in the above embodiment 1, the adsorption step in the adsorption column A is performed (step ST01 in FIG. 4). Next, the first supply section 4 introduces dry air as the first carrier gas into the adsorption column A undergoing the desorption step, via the first carrier gas introduction path 103. The introduced first carrier gas flows while ozone adsorbed to the adsorbent in the adsorption column A is taken along with the first carrier gas, via the carrier gas lead-out path 104, so as to be discharged to the outside of the adsorption column A, thus performing the first desorption step (step ST02 in FIG. 4).

Next, introduction of the first carrier gas is stopped, and then oxygen gas as the second carrier gas is introduced into the adsorption column A via the second carrier gas introduction path 105 from the oxygen source 2. The introduced second carrier gas flows while ozone adsorbed to the adsorbent in the adsorption column A and the first carrier gas remaining in the adsorption column A are taken along with the second carrier gas, via the carrier gas lead-out path 104, so as to be discharged to the outside of the adsorption column A, thus performing the second desorption step (step ST04 in FIG. 4).

As described above, the first carrier gas remaining in the adsorption column A and the carrier gas lead-out path 104 is replaced with the second carrier gas and discharged to the outside of the adsorption column A. Thus, accumulation of nitrogen gas in the adsorption column A can be reduced, whereby a generation amount of NOx gas due to increase in nitrogen gas in the circulation path 120 in the next adsorption step (step ST01) can be reduced. Thus, reduction in ozone generation efficiency can be suppressed and a nitrogen oxide which can cause corrosion of a path or the like can be reduced. Then, introduction of the second carrier gas is stopped, and the process returns to the adsorption step (step ST01 in FIG. 2).

Another example of the ozone supply method according to embodiment 2 will be described. After the second desorption step and before the adsorption step, introduction of the second carrier gas is stopped, and then the inside of the adsorption column A is depressurized by the depressurizing section 5 via the carrier gas lead-out path 104 until the pressure in the adsorption column A becomes lower than the atmospheric pressure, thus performing the vacuum desorption step (step ST05 in FIG. 5). At this time, a second carrier gas component and a first carrier gas component remaining in the adsorption column A without being replaced with the second carrier gas are discharged.

Thus, accumulation of nitrogen gas in the adsorption column A can be further reduced, whereby a generation amount of NOx gas due to increase in nitrogen gas in the circulation path 120 in the next adsorption step (step ST01) can be further reduced. Thus, reduction in ozone generation efficiency can be further suppressed and a nitrogen oxide which can cause corrosion of a path or the like can be further reduced. Then, depressurizing by the depressurizing section 5 is stopped, and thereafter the process returns to the adsorption step (step ST01 in FIG. 5).

As described above, the above effects can be obtained if the pressure in the adsorption column A in the vacuum desorption step is lower than the atmospheric pressure. Further, in order to assuredly obtain these effects, the following is conceivable.

For example, the nitrogen concentration in the adsorption column A undergoing the adsorption step is denoted by C1, the pressure value in the adsorption column A is denoted by P1, the nitrogen concentration in the first carrier gas in the first desorption step is denoted by C2, and the pressure value in the adsorption column A undergoing the vacuum desorption step is denoted by P2.

$$C1 \times P1 \geq C2 \times P2 \quad \ldots \quad (Formula\ 1)$$

The adsorption column A is depressurized until the relationship of the above formula is satisfied.

While the adsorption column A is depressurized until the relationship of the above (Formula 1) is satisfied, the partial pressure (concentration × pressure) of nitrogen gas in the vacuum desorption step (step ST03) may be reduced to not higher than the partial pressure of nitrogen gas in the adsorption step (step ST01), whereby the amount of nitrogen gas adsorbed to the adsorbent in the adsorption column A when the desorption step is finished can be assuredly reduced to be smaller than in the adsorption step. Thus, accumulation of nitrogen gas in the adsorption column A can be assuredly reduced, and the generation amount of NOx gas due to increase in nitrogen gas in the circulation path 120 in the next adsorption step (step ST01) can be assuredly reduced.

The ozone supply system according to embodiment 2 configured as described above provides the same effects as in the above embodiment 1, and in addition, the ozone supply system further includes a second supply section for second carrier gas having a lower nitrogen concentration than a nitrogen concentration of the first carrier gas, the second supply section is connected to the carrier gas introduction path via a carrier gas switchover valve which switches between supply of the first carrier gas and supply of the second carrier gas to the adsorption column, and the carrier gas lead-out path leads the ozone taken along with the second carrier gas to outside of the adsorption column in the desorption step.

Thus, increase in the nitrogen concentration in the adsorption column can be further suppressed.

The ozone supply method according to embodiment 2 configured as described above includes: an adsorption step of adsorbing generated ozone to an adsorbent stored in an adsorption column, leading out oxygen not adsorbed to the adsorbent from the adsorption column, introducing the oxygen as source gas into an ozone generator again to regenerate ozone, and supplying the ozone to the adsorption column; a first desorption step of, after the adsorption step is finished, introducing first carrier gas into the adsorption column and desorbing the ozone adsorbed to the adsorbent by taking the ozone along with the first carrier gas so as to be led out to the adsorption column; and a second desorption step of, after introduction of the first carrier gas is stopped, introducing second carrier gas having a lower nitrogen concentration than a nitrogen concentration of the first carrier gas, desorbing the ozone adsorbed to the adsorbent, and leading the desorbed ozone to outside of the adsorption column, and also replacing the first carrier gas remaining in the adsorption column with the second carrier gas.

Thus, increase in the nitrogen concentration in the adsorption column can be suppressed.

The ozone supply method according to embodiment 2 configured as described above further includes a vacuum desorption step of, after introduction of the second carrier gas is stopped, depressurizing inside of the adsorption column until a pressure in the adsorption column becomes lower than an atmospheric pressure.

Thus, increase in the nitrogen concentration in the adsorption column can be further suppressed.

In the ozone supply method according to embodiment 2 configured as described above, in the vacuum desorption step, the adsorption column is depressurized until $C1 \times P1 \geq C2 \times P2$ is satisfied, where P1 is a pressure value in the adsorption column undergoing the adsorption step, P2 is a pressure value in the adsorption column in the vacuum desorption step, C1 is a nitrogen concentration in the adsorption column undergoing the adsorption step, and C2 is a nitrogen concentration of the first carrier gas in the first desorption step.

Thus, depressurizing is performed until the partial pressure of nitrogen in the vacuum desorption step is reduced to not higher than the partial pressure of nitrogen in the adsorption step, whereby the amount of nitrogen adsorbed to the adsorbent becomes not larger than the same amount, so that nitrogen can be prevented from remaining in a large amount in the adsorption column.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

DESCRIPTION OF THE REFERENCE CHARACTERS

    1 ozone supply system
    101 ozone introduction path

103 first carrier gas introduction path
104 carrier gas lead-out path
105 second carrier gas introduction path
11 switchover valve
12 switchover valve
120 circulation path
121 circulation blower
122 buffer tank
13 switchover valve
14 switchover valve
15 switchover valve
16 switchover valve
17 switchover valve
18 switchover valve
2 oxygen source
3 ozone generator
4 first supply section
5 depressurizing section
6 carrier gas switchover valve

**Claims**

1. An ozone supply system comprising:

   an ozone generator which generates ozone from oxygen supplied from an oxygen source;
   an adsorption column in which an adsorbent for adsorbing the ozone generated by the ozone generator is stored and an adsorption step of adsorbing the ozone to the adsorbent and a desorption step of desorbing the ozone from the adsorbent are repeated alternately;
   a circulation path through which oxygen not adsorbed to the adsorbent is led out from the adsorption column and circulated to be supplied to the ozone generator, in the adsorption step;
   a first supply section for first carrier gas;
   a carrier gas introduction path through which the first carrier gas is introduced from the first supply section into the adsorption column in the desorption step;
   a carrier gas lead-out path through which the ozone taken along with the first carrier gas is led to outside of the adsorption column in the desorption step; and
   a depressurizing section which depressurizes inside of the adsorption column to a pressure lower than an atmospheric pressure in the desorption step.

2. The ozone supply system according to claim 1, further comprising a second supply section for second carrier gas having a lower nitrogen concentration than a nitrogen concentration of the first carrier gas, wherein

   the second supply section is connected to the carrier gas introduction path via a carrier gas switchover valve which switches between supply of the first carrier gas and supply of the second carrier gas to the adsorption column, and
   the carrier gas lead-out path leads the ozone taken along with the second carrier gas to outside of the adsorption column in the desorption step.

3. An ozone supply method comprising:

   an adsorption step of adsorbing generated ozone to an adsorbent stored in an adsorption column, leading out oxygen not adsorbed to the adsorbent from the adsorption column, introducing the oxygen as source gas into an ozone generator again to regenerate ozone, and supplying the ozone to the adsorption column;
   a first desorption step of, after the adsorption step is finished, introducing first carrier gas into the adsorption column and desorbing the ozone adsorbed to the adsorbent by taking the ozone along with the first carrier gas so as to be led out to the adsorption column; and
   a vacuum desorption step of, after introduction of the first carrier gas is stopped, depressurizing inside of the adsorption column until a pressure in the adsorption column becomes lower than an atmospheric pressure.

4. An ozone supply method comprising:

   an adsorption step of adsorbing generated ozone to an adsorbent stored in an adsorption column, leading out oxygen not adsorbed to the adsorbent from the adsorption column, introducing the oxygen as source gas into an ozone generator again to regenerate ozone, and supplying the ozone to the adsorption column;
   a first desorption step of, after the adsorption step is finished, introducing first carrier gas into the adsorption column and desorbing the ozone adsorbed to the adsorbent by taking the ozone along with the first carrier gas so as to be led out to the adsorption column; and
   a second desorption step of, after introduction of the first carrier gas is stopped, introducing second carrier gas having a lower nitrogen concentration than a nitrogen concentration of the first carrier gas, desorbing the ozone adsorbed to the adsorbent, and leading the desorbed ozone to outside of the adsorption column, and also replacing the first carrier gas remaining in the adsorption column with the second carrier gas.

5. The ozone supply method according to claim 4, further comprising a vacuum desorption step of, after introduction of the second carrier gas is stopped, depressurizing inside of the adsorption column until a pressure in the adsorption column becomes lower than an atmospheric pressure.

6. The ozone supply method according to claim 3 or 5, wherein

in the vacuum desorption step, the adsorption column is depressurized until $C1 \times P1 \geq C2 \times P2$ is satisfied, where
P1 is a pressure value in the adsorption column undergoing the adsorption step,
P2 is a pressure value in the adsorption column in the vacuum desorption step,
C1 is a nitrogen concentration in the adsorption column undergoing the adsorption step, and

C2 is a nitrogen concentration of the first carrier gas in the first desorption step.

# FIG. 1

EP 4 725 898 A1

*FIG. 2*

*FIG. 3*

1

OXYGEN SOURCE — 2

OZONE GENERATOR — 3

BUFFER TANK

CIRCULATION BLOWER — 121

122

SWITCHOVER VALVE — 11

SWITCHOVER VALVE — 17

SWITCHOVER VALVE — 12

SWITCHOVER VALVE — 18

DEPRESSURIZING SECTION — 5

101

104

ADSORPTION COLUMN — A

ADSORPTION COLUMN — B

SWITCHOVER VALVE — 13

SWITCHOVER VALVE — 15

SWITCHOVER VALVE — 14

SWITCHOVER VALVE — 16

CARRIER GAS SWITCHOVER VALVE — 6

FIRST SUPPLY SECTION — 4

103

105

120

EP 4 725 898 A1

11

# FIG. 4

EP 4 725 898 A1

**FIG. 5**

# EP 4 725 898 A1

## INTERNATIONAL SEARCH REPORT

| | International application No. |
|---|---|
| | **PCT/JP2023/021388** |

### A. CLASSIFICATION OF SUBJECT MATTER

*C01B 13/10*(2006.01)i; *B01D 53/04*(2006.01)i
FI: C01B13/10 A; B01D53/04

According to International Patent Classification (IPC) or to both national classification and IPC

### B. FIELDS SEARCHED

Minimum documentation searched (classification system followed by classification symbols)

C01B13/10; B01D53/04;B01D53/86;B01D53/94

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2001-172004 A (NIPPON SANSO CORP.) 26 June 2001 (2001-06-26) <br> abstract, claims, paragraphs [0009]-[0029], fig. 1 | 1, 3 |
| Y | | 2, 4, 5, 6 |
| X | JP 11-92110 A (ISHIKAWAJIMA HARIMA HEAVY IND. CO., LTD.) 06 April 1999 (1999-04-06) <br> paragraphs [0003]-[0004], [0011]-[0014], [0021], fig. 1, 2, 5, 6 | 1,3 |
| Y | | 2, 4, 5, 6 |
| X | JP 9-142808 A (ISHIKAWAJIMA HARIMA HEAVY IND. CO., LTD.) 03 June 1997 (1997-06-03) <br> abstract, [0003]-[0007], [0009]-[0022], [0029], fig. 1, 3 | 1, 3 |
| Y | | 2, 4, 5, 6 |
| X | JP 9-142807 A (ISHIKAWAJIMA HARIMA HEAVY IND. CO., LTD.) 03 June 1997 (1997-06-03) <br> abstract, paragraphs [0007]-[0021], fig. 1 | 1, 3 |
| Y | | 2, 4, 5, 6 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 August 2023** | **22 August 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

International application No.

**PCT/JP2023/021388**

### C. DOCUMENTS CONSIDERED TO BE RELEVANT

| Category* | Citation of document, with indication, where appropriate, of the relevant passages | Relevant to claim No. |
|---|---|---|
| Y | JP 10-67501 A (NIPPON SANSO CORP.) 10 March 1998 (1998-03-10)<br>paragraphs [0012]-[0025], fig. 1 | 2, 4, 5, 6 |
| Y | JP 7-144903 A (ISHIKAWAJIMA HARIMA HEAVY IND. CO., LTD.) 06 June 1995 (1995-06-06)<br>abstract, paragraphs [0008]-[0017], fig. 1, 3 | 2, 4, 5, 6 |
| Y | JP 11-92113 A (ISHIKAWAJIMA HARIMA HEAVY IND. CO., LTD.) 06 April 1999 (1999-04-06)<br>paragraphs [0016]-[0023], fig. 1 | 2, 4, 5, 6 |

Form PCT/ISA/210 (second sheet) (January 2015)

## INTERNATIONAL SEARCH REPORT
### Information on patent family members

International application No.

**PCT/JP2023/021388**

| Patent document cited in search report | | | Publication date (day/month/year) | Patent family member(s) | Publication date (day/month/year) |
|---|---|---|---|---|---|
| JP | 2001-172004 | A | 26 June 2001 | (Family: none) | |
| JP | 11-92110 | A | 06 April 1999 | (Family: none) | |
| JP | 9-142808 | A | 03 June 1997 | (Family: none) | |
| JP | 9-142807 | A | 03 June 1997 | (Family: none) | |
| JP | 10-67501 | A | 10 March 1998 | (Family: none) | |
| JP | 7-144903 | A | 06 June 1995 | US 005520887 A1 abstract, paragraphs [0008]-[0017], fig. 1, 3 | |
| JP | 11-92113 | A | 06 April 1999 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001172004 A